# EUROPÄISCHE PATENTANMELDUNG

(11) **EP 2 883 817 A1**
(43) Veröffentlichungstag der Anmeldung: **17.06.2015**
(21) Anmeldenummer: 14197470.9
(22) Anmeldetag: 11.12.2014
(51) Int. Cl.: B65G 1/137

(54) **Flexibles Kommissioniersystem für Multi - Channel - Versand**

(30) Priorität: 11.12.2013 DE 102013113888
(71) Anmelder: Winkler, Walter, 92711 Parkstein (DE)
(72) Erfinder: Winkler, Walter, 92711 Parkstein (DE)
(74) Vertreter: Lang, Christian

(57) **Zusammenfassung**

Die Erfindung betrifft ein Kommissioniersystem mit einer Liefereinheitendepalettiervorrichtung (4,) zum Depalettieren von Liefereinheiten (100) in Handelseinheiten (102,103,107), mit einem Lager (109) für die Handelseinheiten und mit einer Vorrichtung (5,6) zum automatischen Kommissionieren von Handelseinheiten in Versandeinheiten (110), wobei weiterhin eine Einzelkommissioniereinrichtung (10) mit einer Umpackstation (11) zum Umpacken von Einzelwaren (126,127) aus Handelseinheiten vorgesehen ist, in welcher Einzelwaren aus Handelseinheiten in Einzelwarenlagereinheiten (125) umgepackt werden, wobei in der Einzelkommissioniereinrichtung (10) die Einzelwaren in den Einzelwarenlagereinheiten (125) bereitgestellt werden, um in Einzelwarenversandbehälter kommissioniert zu werden. Ferner betrifft die Erfindung ein entsprechendes Verfahren.

## Beschreibung

### HINTERGRUND DER ERFINDUNG

### GEBIET DER ERFINDUNG

Die Erfindung betrifft ein Kommissioniersystem, mit dem Liefereinheiten, die von einem Hersteller oder Großhändler sortenrein mit gleichen oder gleichartigen Produkten angeliefert werden, in Einheiten kommissioniert werden, die an Einzelhandelsgeschäfte oder Endkunden verschickt werden und üblicherweise verschiedene Produkte enthalten. Darüber hinaus betrifft die vorliegende Erfindung ein entsprechendes Verfahren zur Kommissionierung von Waren.

Insbesondere betrifft die vorliegende Erfindung die Kombination unterschiedlicher Kommissionierarten in einem neuen Kommissioniersystem, mit dem unterschiedliche Distributionswege für die kommissionierten Waren in der Art eines Mehr - Kanal - Systems (Multi Channel Supply) realisiert werden können, so dass in Ergänzung zum Multi - Channel - Marketing zur Kaufanbahnung über verschiedene Vertriebskanäle ein korrespondierende Auftragsbearbeitung und Versorgung der Kunden mit einer entsprechenden Logistik zur Verfügung steht. Bei dem Multi Channel Supply können Waren sowohl an Geschäfte oder Fillialen oder direkt an Endkunden versandt werden oder die Waren eines Auftrags können vorgepackt in Fillialen, Geschäften oder speziellen Abholpunkten (pick up points) von den Kunden abgeholt werden.

Grundlage der Erfindung ist ein Lager- und Kommissioniersystem, das die Anforderungen des Marktes in Richtung "Multi Channel" in wirtschaftlicher Weise abdecken kann.

Durch die Mehrfachnutzung von Komponenten einzelner Kommissioniervorrichtungen können zudem signifikante Einsparpotentiale und somit wirtschaftliche Vorteile realisiert werden, welche die Kosten pro Verkaufseinheit bei einzelnen Distributionskanälen auf ein Drittel der Kosten bisheriger Systeme reduzieren lassen.

### STAND DER TECHNIK

Die Kommissionierung von Waren ist im Handel, aber auch in der industriellen Produktion eine seit langem bestehende Aufgabe. Der Händler kauft üblicherweise bestimmte Waren in großen Mengen ein, um sie in kleineren Einheiten zusammen mit verschiedenen anderen Waren weiter zu verkaufen. In der industriellen Produktion werden in vergleichbarer Weise verschiedene Bauteile in kleiner Anzahl bei der Montage benötigt, während gleichartige Waren in großen Mengen eingekauft werden.

Wenn Waren in großen Mengen eingekauft werden, werden sie in großen Gebinden oder Einheiten angeliefert, in denen jeweils gleiche Arten von Waren zusammengefasst sind. Werden die einzelnen Waren weiterverkauft oder in der Produktion benötigt, so müssen sie vereinzelt werden und zusammen mit anderen Waren in Gebinden mit unterschiedlichen Waren zusammengefasst werden, um den Transport bzw. die Auslieferung an die Verbrauchsstelle zu ermöglichen. Ein solches "Handhaben" wird im Bereich der Logistik auch als Kommissionieren für einen Auftrag bezeichnet.

Beispielsweise werden heutzutage im Lebensmittelhandel von den Händlern eine Vielzahl von Einzelhandelsgeschäften oder Filialen beliefert, die von regionalen Distributionszentren regelmäßig versorgt werden. In den Distributionszentren werden von den Herstellern der Lebensmittel die Waren in großen Mengen angeliefert und der Händler kommissioniert die Waren in Lieferungen mit verschiedenen Waren an die Einzelhandelsgeschäfte.

Entsprechende Kommissionieraufgaben gibt es auch bei Endkundenbelieferungen, im Onlinehandel, Versandhandel oder e - Commerce, wenn bei Bestellungen von Kunden verschiedene Waren in einer Lieferung an den Kunden ausgeliefert werden.

Allerdings sind die einzelnen Kommissionieraufgaben deutlich unterschiedlich, und zwar in Abhängigkeit von der Anzahl der verfügbaren Waren und des üblichen Umfangs einer Bestellung bzw. eines Auftrags. So können beispielsweise im Lebensmitteleinzelhandel mehrere tausend unterschiedlicher Waren in einem Einzelhandelsgeschäft vertrieben werden, wobei ein durchschnittlicher Auftrag für die Nachlieferung von Waren mehrere hundert verschiedene Artikel mit einem Transportvolumen von einem LKW oder einem halben LKW umfassen kann. Dem gegenüber kann beispielsweise beim Versandhandel oder dem elektronischen Handel, dem sogenannten e-commerce mit Bestellungen über das Internet, der Umfang eines Lieferauftrags in der Größenordnung von einigen wenigen unterschiedlichen Waren liegen, während gleichzeitig das Warenangebot noch größer sein kann. Darüber hinaus ist es für den Kommissionierauftrag von Bedeutung, inwieweit sich die zu kommissionierenden Waren in ihrer Art und Beschaffenheit, insbesondere ihrer Verpackung, unterscheiden oder gleichen. Bei einer ausschließlichen Kommissionierung von gleichartigen Waren bzw. gleichartig verpackten Waren z. B. in quaderförmigen Kartons, ist die Kommissionieraufgabe deutlich einfacher im Vergleich zu einer Kommissionierung einer Vielzahl unterschiedlich beschaffener und verpackter Gegenstände.

Da die Kommissionierung die Bewegung von vielen zum Teil schweren Gegenständen erfordert und somit die bewegte Masse einen großen Umfang aufweisen kann, ist es das Bestreben die Kommissionierung möglichst weitgehend zu automatisieren. Allerdings unterscheiden sich bekannte automatisierte Kommissioniersysteme und - verfahren aufgrund der oben angesprochenen Unterschiedlichkeit der Kommissionieraufgaben sehr deutlich, da die verschiedenen Kommissionieraufgaben für eine effiziente Durchführung sehr unterschiedliche technische Einrichtungen und Verfahrensabläufe der Kommissioniersysteme erfordern.

So beschreibt beispielsweise die DE 197 19 651 A1 ein Verfahren und eine Anlage zur Kommissionierung von Artikeln bei denen sogenannte Schnellläufer - Artikel und Langsamläufer - Artikel an einem Kommissionierplatz nach dem Prinzip Ware - zum - Mann dem Kommissionierer am Kommissionierarbeitsplatz zur Verfügung gestellt werden, damit dieser die unterschiedlichen Waren in eine Einheit zur Auslieferung an den Kunden oder zur Lieferung in einem Produktionsprozess oder dergleichen kommissioniert. Die Schnellläufer - Artikel bezeichnen hierbei Artikel, die einen hohen Umsatz in der Kommissionierung aufweisen, also häufig gebraucht werden, während die Langsamläufer - Artikel Artikel sind, die nur selten benötigt werden und deshalb einen geringen Umsatz im Kommissioniersystem aufweisen.

Bei diesem Kommissioniersystem wird die Kommissionierung halb automatisiert vorgenommen, indem die zu kommissionierenden Waren vollautomatisch an den Kommissionierarbeitsplätzen bereitgestellt werden, während die eigentliche Kommissionierung in einen Versandbehälter durch einen Menschen erfolgt.

Demgegenüber beschreibt das Dokument DE 103 13 577 B4 ein automatisiertes System zum Lagern und Kommissionieren von Artikel, bei dem voll automatisiert gemäß einem Auftrag oder einer Bestellung die unterschiedlichen, zu kommissionierenden Waren aus einem Lager entnommen und voll automatisiert auf einem Ladungsträger, wie einer Palette oder einem Rollcontainer bereitgestellt werden. Durch die computergestützte Steuerung des Kommissioniersystems kann die Beladung der Ladungsträger nach Beschaffenheit der zu ladenden Artikel, wie beispielsweise Gewicht oder dergleichen, und/oder nach den Bedürfnissen der Entladung beim Kunden bzw. Auftraggeber auf einem Ladungsträger erfolgen. Ein derartiges System arbeitet vollautomatisch, wobei von der automatischen Erfassung des Auftrags bis zur Bereitstellung der kommissionierten Versandeinheit kein Eingriff von Kommissionierpersonal erforderlich ist.

Obwohl die verschiedenen Kommissioniersysteme und - verfahren für die jeweiligen Kommissionieraufgaben effiziente Lösungen anbieten, besteht eine Problematik darin, dass die bekannten Systeme eine hohe Effizienz üblicherweise nur in einem vordefinierten Kapazitätsbereich für eine bestimmte Kommissionieraufgabe aufweisen, sodass die kalkulierte Effizienz der Anlagen und Verfahren nur erreicht werden kann, wenn die dem Design der Anlagen und Verfahren zugrunde gelegten Annahmen über die Anzahl der zu kommissionierenden Waren und der Kommissionieraufträge in dem vorgegebenen Bereich liegen. Insofern besteht ein Nachteil in einer gewissen Inflexibilität derartiger Kommissionieranlagen und -systeme hinsichtlich einer effizienten Anpassung an sich ändernde Marktbedingungen.

### OFFENBARUNG DER ERFINDUNG

### AUFGABE DER ERFINDUNG

Es ist deshalb Aufgabe der vorliegenden Erfindung ein Kommissioniersystem und ein Verfahren bereitzustellen, welches für unterschiedliche Kommissionieraufgaben eine effiziente Bearbeitung dieser Kommissionieraufgaben ermöglicht und insbesondere einen flexiblen Einsatz gewährleistet. Allerdings sollen diese Aufgaben mit geringem Aufwand gelöst werden, wobei entsprechende Kommissionieranlagen einfach aufgebaut und Kommissionierverfahren einfach durchgeführt werden sollen.

### TECHNISCHE LÖSUNG

Diese Aufgabe wird gelöst durch ein Kommissioniersystem mit den Merkmalen des Anspruchs 1 und einem Verfahren mit den Merkmalen des Anspruchs 12. Vorteilhafte Ausgestaltungen sind Gegenstand der abhängigen Ansprüche.

Die Erfindung schlägt vor verschiedene Kommissioniersysteme und -verfahren, wie sie beispielsweise in der DE 197 19 651 A1 und der DE 103 13 577 B4 beschrieben sind, miteinander zu kombinieren, um durch den kombinierten Betrieb verschiedener Kommissioniervorrichtung Synergien zu ermöglichen und so eine hohe Effizienz bei einem flexiblen Einsatz zu ermöglichen. Obwohl die Kombination der in der DE 197 19 651 A1 und der DE 103 13 577 B4 beschriebenen Verfahren und Anlagen vorteilhaft ist, ist die Erfindung jedoch nicht darauf beschränkt.

Vielmehr ist es die Anforderung, Distributionszentren v.a. für den Handel so zu gestalten, dass sie zum einen Einzelhandelsgeschäfte oder Filialen - bezogen auf den jeweiligen Auftrag - mit einer großen Anzahl unterschiedlicher Artikel in großen und mittleren Mengen beliefern, zum anderen aber auch Endkunden mit kleineren Auftragsgrößen. Einzelhandelsgeschäfte oder Filialen sowie die Endkunden bedienen sich dabei aus einer gemeinsamen hohen Anzahl von Artikeln welche im Distributionszentrum gelagert und kommissioniert werden.

Aufgrund der Auftragsgrößen ergeben sich unterschiedliche Versandeinheiten. Bei der Belieferung an Einzelhandelsgeschäfte und Filialen handelt es sich vorwiegend um Paletten und RoCos. Bei der Endkundenbelieferung gewöhnlich um Kartons oder Behälter.

### DEFINITIONEN

Für die vorliegende Beschreibung werden folgende Definitionen der verwendeten Begriffe eingeführt.

Unter einer Liefereinheit wird ein Gebinde bzw. eine Zusammenstellung von Waren auf einem Ladungsträger, wie beispielsweise einer Palette oder einem Rollcontainer, verstanden, die von einem Hersteller, Zulieferer, Lieferanten oder dergleichen mit sortenreinen Waren an das Kommissioniersystem geliefert wird. Sind somit sämtliche Einheiten darunter zu verstehen, die dem beschriebenen Kommissioniersystem zugeführt werden.

Unter Handelseinheit wird eine Zusammenstellung bzw. Gebinde von sortenreinen Artikeln bzw. Waren verstanden, wie sie beispielsweise in einem Einzelhandelsgeschäft angeliefert werden. Eine Handelseinheit umfasst somit üblicherweise mehrere Waren des gleichen Typs, wobei in speziellen Fällen eine Handelseinheit ausnahmsweise auch durch eine einzelne Ware gebildet sein kann.

Unter einer Versandeinheit wird eine Zusammenstellung oder ein Gebinde von verschiedenen Handelseinheiten verstanden, die von dem Kommissioniersystem ausgegeben werden, um beispielsweise in ein Einzelhandelsgeschäft transportiert zu werden.

Lagereinheiten sind die Zusammenstellungen oder Gebinde von Artikeln oder Waren oder von Handelseinheiten mit Ladungsträgern, wie Behältern, Trays, Paletten, Rollcontainer oder dergleichen, die zur Lagerung in einem zentralen Lagerbereich oder einem dezentralen Lagerbereich des Kommissioniersystems und/oder des jeweiligen Kommissionierbereichs vorgesehen sind.

Einzelwaren bezeichnen bei der vorliegenden Beschreibung die Artikel und Waren, die in Handelseinheiten zusammengefasst sind. Insbesondere handelt es sich bei den Einzelwaren um einzeln handhabbare Waren, die beispielsweise in einem Einzelhandelsgeschäft einzeln verkauft werden oder in einem Produktionsprozess einzeln eingebaut werden.

Einzelwarenlagereinheiten sind Behälter, wie Kunststoffbehälter, Kartons, sogenannte Trays oder sonstige Ladungsträger, in denen Einzelwaren gelagert und im Kommissioniersystem transportiert werden können.

Demgegenüber bezeichnen Einzelwarenversandbehälter entsprechende Ladungsträger oder Behälter, wie Kunststoffbehälter, Kartons, Trays oder sonstige Hilfsmittel, mit denen einzelne Waren aus dem Kommissioniersystem ausgeliefert werden können, um beispielsweise an Einzelhandelsgeschäfte oder Endkunden geschickt zu werden.

Eine Einzelkommissioniereinrichtung bezeichnet eine Einrichtung zum Kommissionieren von Einzelwaren, während eine Vorrichtung zum Kommissionieren von Handelseinheiten eben auf die Kommissionierung von Handelseinheiten bezogen ist. Weiterhin bezeichnet eine Transportbehälterkommissioniervorrichtung eine Kommissioniervorrichtung zum Kommissionieren von Transportbehältern.

Transportbehälter werden wiederum diejenigen Behälter oder Ladungsträger, wie beispielsweise Kunststoffkisten, Kartons, Trays oder sonstige Ladungsträger bezeichnet, in denen bereits Einzelwaren angeliefert werden, aber die auch zum Versand der Einzelwaren eingesetzt werden, sodass die Transportbehälter sowohl beim Kommissioniersystem angeliefert als auch von diesem ausgeliefert werden. Im Lebensmitteleinzelhandel betrifft dies insbesondere Behälter oder Ladungsträger für Obst und Gemüse, die häufig mit denselben Behältern angeliefert und nach der Kommissionierung versandt werden. Neben Behältern für Obst und Gemüse können hierbei auch Getränkekisten im Mehrwegpfandsystem genannte werden.

Transport- oder Förderstrecken werden durch jedwede geeignete Einrichtung oder Vorrichtung gebildet, die einen Transport oder eine Handhabung der entsprechenden Gegenstände ermöglichen, wie beispielsweise Gurt - oder Bandförderer, Rollenförderer, Vertikalförderer, Lifte, Querförderer und dergleichen.

### BESCHREIBUNG DER ERFINDUNG

Gemäß der vorliegenden Erfindung wird vorgeschlagen neben einer Vorrichtung zum automatischen Kommissionieren von Handelseinheiten in Versandeinheiten eine Einzelkommissioniereinrichtung vorzusehen, mit welcher Einzelwaren in Einzelwarenversandbehälter kommissioniert werden. Die Einzelkommissionereinrichtung umfasst eine Umpackstation zur Umpacken von Einzelwaren aus Handelseinheiten, wobei die Einzelwaren aus Handelseinheiten in Einzelwarenlagereinheiten umgepackt werden, um in der Einzelkommissioniereinrichtung gehandhabt werden zu können. Aus den Einzelwarenlagereinheiten werden die Einzelwaren an entsprechenden Kommissionierplätzen durch manuelle Bediener in Einzelwarenversandbehälter kommissioniert.

Durch das parallele Vorsehen einer Vorrichtung zum automatischen Kommissionieren von Handelseinheiten und einer Einzelkommissioniereinrichtung von Kommissionierung von Einzelwaren in Einzelwarenversandbehälter ist eine Möglichkeit gegeben aus einem Lager mit Liefereinheiten, wie beispielsweise einem Palettenlager, sowohl den Vertrieb in Einzelhandelsgeschäften als auch die direkte Belieferung von Endkunden im Bereich des e - commerce zu ermöglichen. Entsprechend kann flexibel auf unterschiedliche Anforderungen reagiert werden. Insbesondere können mit einem derartigen System sogenannte click - and - collect - services in den entsprechenden Einzelhandelsgeschäften angeboten werden, bei denen Kunden online bzw. elektronisch bestellen (click) und ihre fertig gepackte Lieferung in einem Einzelhandelsgeschäft abholen (collect). Mit dem erfindungsgemäßen Kommissioniersystem in einem Distributionszentrum kann somit sowohl die Kommissionierung der Handelseinheiten für das Einzelhandelsgeschäft Einzelwarenversandbehälter durchgeführt werden, als auch die Kommissionierung von Einzelwaren in Einzelwarenversandbehälter, die von den entsprechenden Kunden im Einzelhandelsgeschäft abgeholt werden können oder die die fertig vorgepackte Bestellung des Kunden enthalten.

Insbesondere können bei der parallelen Realisierung von zwei unterschiedlichen Kommissioniervorrichtungen, wie der Vorrichtung zum automatischen Kommissionieren von Handelseinheiten und der Einzelkommissioniereinrichtung, nicht nur unterschiedliche Kommissionieraufgaben aus einer gemeinsamen Bezugsquelle, wie einem Liefereinheitenlager, z.B. einem Palettenlager, erledigt werden, sondern es können zumindest teilweise auch einzelne Komponenten der jeweiligen Kommissioniervorrichtung bzw. Kommissionereinrichtung gemeinsam genutzt werden, wie beispielsweise eine Depalettiereinrichtung zum Depalettieren von Liefereinheiten.

So kann auch ein gemeinsames Liefereinheitenlager, wie z.B. ein Palettenlager, von zwei oder mehr Kommissioniervorrichtungen genutzt werden, was den Aufwand für die einzelne Kommissioniereinrichtung reduziert und eine ausreichende und beständige Versorgung mit Waren gewährleistet.

Darüber hinaus können Querverbindungen zwischen den einzelnen Kommissioniervorrichtungen, wie der Vorrichtung zum automatischen Kommissionieren von Handelseinheiten und der Einzelkommissioniereinrichtung, vorgesehen werden, die nicht nur einen parallelen Betrieb, sondern ein gegenseitiges Zusammenwirken der entsprechenden Vorrichtungen ermöglichen.

Somit können Lagerbereiche in den einzelnen Kommissioniervorrichtungen, die in den parallel angeordneten und betriebenen Kommissioniervorrichtungen zur Bereitstellung und Auslagerung der Waren gemäß dem Kommissionierauftrag vorgesehen sind, miteinander zum gegenseitigen Austausch der bereitgestellten Waren gegebenenfalls über Vorrichtungen zur Anpassung der Lagereinheiten verbunden sein, um einen gegenseitigen Ausgleich an bereitgestellten Waren zu ermöglichen.

Weiterhin können an den Ausgängen der Kommissionierbereiche mit den verschiedenen Kommissioniereinrichtungen ebenfalls Querverbindungen vorgesehen sein, die einen gegenseitigen Austausch der kommissionierten Einheiten für den Versand ermöglichen.

Darüber hinaus sind weitere Querverbindungen zwischen den Kommissionierbereichen der verschiedenen Kommissioniervorrichtungen möglich, um unterschiedlichste Komponenten miteinander zu verbinden und einen Warenaustausch zu ermöglichen, so dass das System so flexibel wie möglich oder nötig betrieben werden kann.

So kann das Kommissioniersystem eine Fördereinrichtung zum Transport von Versandeinheiten zur Umpackstation der Einzelkommissioniereinrichtung aufweisen, um der Einzelkommissioniereinrichtung Versandeinheiten, die von der Vorrichtung zum automatischen Kommissionieren von Handelseinheiten ausgegeben werden als Eingangseinheiten zuzuführen. Damit kann der Betrieb der Einzelkommissioniereinrichtung effizienter gestaltet werden, da nicht eine komplette Liefereinheit aus einem Liefereinheitenlager der Einzelkommissioniereinrichtung zugeführt werden muss, sondern lediglich eine Handelseinheit mit einer geringeren Anzahl der betreffenden Einzelwaren, um so die Gestaltung der Einzelkommissioniereinrichtung klein und entsprechend effizient zu gestalten und die Nachschubmenge und Nachschubfrequenz zu reduzieren.

Bei der Einzelkommissioniereinrichtung kann nämlich ein Einzelkommissionierlager vorgesehen sein, in welchem Einzelwaren in Einzelwarenlagereinheiten gelagert sind, um bei Bedarf vollautomatisch an Bereitstellungsplätzen bereit gestellt zu werden, sodass aus den an den Bereitstellungsplätzen bereitgestellten Einzelwarenlagereinheiten die Einzelwaren in Einzelwarenversandeinheiten kommissioniert werden können.

Hierzu ist in der Einzelkommissioniereinrichtung eine Umpackstation vorgesehen, bei der die Waren aus Liefereinheiten bzw. den darin enthaltenen Handelseinheiten in Einzelwarenlagereinheiten umgepackt werden, damit die Einzelwaren in den Einzelwarenlagereinheiten automatisiert und definiert im Kommissioniersystem bewegt und gehandhabt werden können. Bei einer Kombination der Vorrichtung zur automatischen Kommissionierung von Handelseinheiten mit der Einzelkommissioniereinrichtung mit einer Fördereinrichtung zum Transport von Versandeinheiten zur Umpackstation der Einzelkommissioniereinrichtung können in der Einzelkommissioniereinrichtung zusätzlich oder alternativ zu den Liefereinheiten Versandeinheiten der Vorrichtung zur automatischen Kommissionierung von Handelseinheiten als Eingangseinheiten verarbeitet werden.

Zusätzlich kann das Kommissioniersystem eine dritte Kommissioniervorrichtung aufweisen, die wiederum parallel zu den beiden anderen Kommissioniervorrichtungen vorgesehen ist, wobei es sich bei der dritten Kommissioniervorrichtung um eine Transportbehälterkommissioniervorrichtung zum Kommissionieren von Transportbehältern handeln kann. Damit ist es möglich Waren, wie beispielsweise Obst oder Gemüse oder aber auch Getränkekisten, bei denen die Einzelwaren in dem Transportbehälter angeliefert, in der Kommissioniereinrichtung transportiert und auch ausgeliefert werden, zu handhaben.

Eine derartige Transportbehälterkommissioniervorrichtung kann ein Transportbehälterlager zur Lagerung von Transportbehältern und eine Stapel- und/oder Palettiereinrichtung zum Zusammenführen und Kommissionieren von Transportbehältern in eine Behälterversandeinheit umfassen. Die in dem Transportbehälterlager eingelagerten Transportbehälter werden entsprechend einem Kommissionierauftrag in der gewünschten Sequenz ausgelagert und von der Stapel- und/oder Palettiereinrichtung in einer Behälterversandeinheit zusammengestellt, um von der Transportbehälterkommissioniervorrichtung an den Versand ausgegeben zu werden.

Die Transportbehälterkommissioniervorrichtung kann weiterhin eine Transportbehälterdepalettiervorrichtung umfassen, in der die Transportbehälter aus der Transportbehälterliefereinheit vereinzelt werden, um in ein Transportbehälterlager eingelagert zu werden. Anstelle einer eigenen Transportbehälterdepalettiervorrichtung kann auch eine gemeinsame Depalettiervorrichtung mit den anderen Kommissioniervorrichtungen verwendet werden.

Die Transportbehälterkommissioniervorrichtung kann wiederum mit der Einzelhandelskommissioniereinrichtung über Querverbindungen zusammenarbeiten, sodass nicht nur ein paralleler Betrieb der Transportbehälterkommissioniervorrichtung neben der Vorrichtung zum automatischen Kommissionieren von Handelseinheiten und der Einzelkommissioniereinrichtung gegeben ist. So kann das Kommissioniersystem eine Transportbehältertransportstrecke aufweisen, mit der einzelne Transportbehälter aus der Transportbehälterkommissioniervorrichtung, beispielsweise nach der Transportbehälterdepalettiervorrichtung in die Einzelkommissioniereinrichtung überführt werden können, um direkt in das Einzelkommissionierlager eingelagert zu werden. Damit können Einzelwaren, die über Transportbehälter angeliefert werden ebenfalls in der Einzelkommissioniereinrichtung kommissioniert werden.

Darüber hinaus kann das Kommissioniersystem eine Einzelwarenversandbehälterförderstrecke umfassen, die die Einzelkommissioniereinrichtung mit dem Transportbehälterlager der Transportbehälterkommissioniervorrichtung verbindet, sodass Einzelwarenversandbehälter in das Transportbehälterlager eingelagert werden und nachfolgend über die Stapel- und/oder Palettiereinrichtung der Transportbehälterkommissioniervorrichtung in eine Behälterversandeinheit kommissioniert werden können. Damit kann beispielsweise auch auf eine Einzelwarenversandbehälterpackeinrichtung in der Einzelkommissioniereinrichtung verzichtet werden, da die fertig kommissionierten Einzelwarenversandbehälter über die Transportbehälterkommissioniervorrichtung versandfertig gemacht werden können.

Die Einzelkommissioniereinrichtung kann gemäß der Vorrichtung und dem Verfahren zum Kommissionieren nach der DE 197 19 651 A1 ausgestaltet sein, sodass die Einzelkommissioniereinrichtung statische und/oder dynamische Bereitstellungsplätze für Einzelwarenlagereinheiten aufweist, sodass die Einzelkommissioniereinrichtung kompakt und klein dimensioniert sein kann.

Mit dem vorgestellten Verfahren und dem System zur Kommissionierung von Waren ist es somit möglich, unterschiedliche Kommissionieraufgaben parallel nebeneinander durchzuführen, aber die entsprechenden Kommissioniervorrichtungen und Kommissioniereinrichtungen auch miteinander arbeiten zu lassen, sodass eine flexible Möglichkeit zur Kommissionierung von unterschiedlichen Kommissionieraufgaben besteht. Darüber hinaus lassen sich einzelne Komponenten, wie beispielsweise Depalettierer auch gemeinsam nutzen, sodass insgesamt der Aufwand für die gesamte Kommissionieranlage bzw. das Kommissioniersystem gering gehalten werden kann.

Ferner kann das Kommissioniersystem hinsichtlich der erforderlichen Transportwege ebenfalls einfach gehalten werden, da nur wenige Transportwege mit keinen oder wenigen Abzweigungen zwischen den Kommissioniereinrichtungen und - vorrichtungen des Systems erforderlich sind, sodass der Aufwand für die Überwachung und Steuerung gering gehalten werden kann. Insbesondere können die Transportwege innerhalb der einzelnen Kommissioniereinrichtungen bzw. - Vorrichtungen und zwischen den Kommissioniereinrichtungen bzw. - Vorrichtungen so gestaltet werden, dass eine indirekte Zielverfolgung möglich ist, was bedeutet, dass keine Identifizierung der transportierten Gegenstände an Abzweigungen oder dergleichen erforderlich ist, sondern dass lediglich überwacht werden muss, ob der bereits im System bekannte Gegenstand eine bestimmte Transportstrecke zurück gelegt hat oder nicht.

Alternativ ist es jedoch auch möglich, dass die zu transportierenden Einheiten Identifikationsmittel, wie Barcodes, 2D - Codes, RFID - Tags oder dergleichen aufweisen, mit denen eine Identifikation in den Fördereinrichtungen des Kommissioniersystems möglich ist.

### KURZBESCHREIBUNG DER FIGUREN

Die beigefügten Zeichnungen zeigen in rein schematischer Weise in
- Fig. 1: einen Materialflussplan einer ersten Ausführungsform eines erfindungsgemäßen Kommissioniersystems;
- Fig. 2: einen Materialflussplan einer zweiten Ausführungsform eines erfindungsgemäßen Kommissioniersystems; und in
- Fig. 3: eine Darstellung eines Kommissioniersystems ähnlich dem Materialflussplan der Fig. 2.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

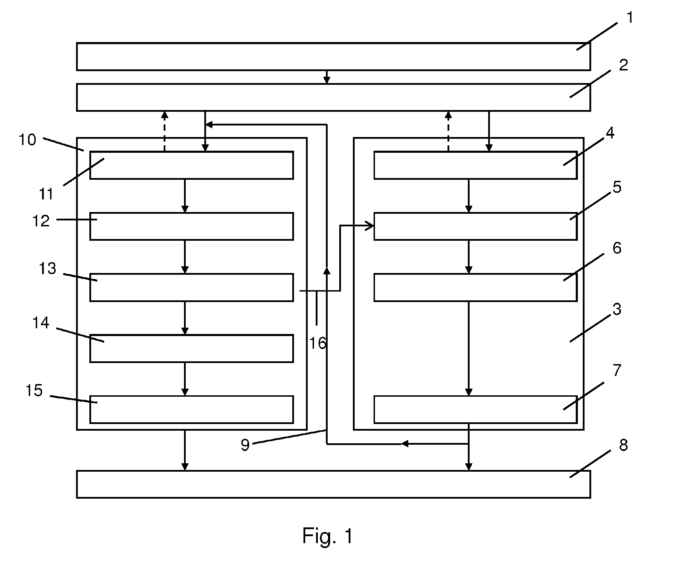

Die Fig. 1 zeigt einen Materialflussplan eines ersten Ausführungsbeispiels eines erfindungsgemäßen Kommissioniersystems. Im Annahmebereich 1 kommen die Liefereinheiten mit den Waren der Hersteller an, die in dem Kommissioniersystem kommissioniert werden sollen. Die Liefereinheiten sind üblicherweise sortenrein und enthalten die Einzelwaren in Handelseinheiten, die zu entsprechenden Liefereinheiten zusammengefasst sind. So kann beispielsweise eine Liefereinheit durch einen Stapel von Handelseinheiten auf einer Palette gebildet sein, wobei in jeder Handelseinheit eine bestimmte Anzahl von Einzelwaren, beispielsweise in einem Karton, einer Schrumpffolie oder dergleichen zusammengefasst sind. Darüber hinaus können Handelseinheiten auch durch Einzelwaren gebildet sein.

Die Liefereinheiten werden in einem Liefereinheitenlager 2 eingelagert, welches beispielsweise ein voll automatisch betriebenes Hochregallager sein kann.

In Abhängigkeit von den jeweiligen Kommissionieraufträgen, die computergestützt durch entsprechend ablaufende Software gesteuert werden, werden die erforderlichen Liefereinheiten durch Lagerbediengeräte aus dem Liefereinheitenlager 2 ausgelagert und einem geeigneten Kommissionierbereich zugeführt, wie z.B. dem ersten Kommissionierbereich 3, der eine Vorrichtung zum automatischen Kommissionieren von Handelseinheiten umfasst.

Zunächst wird die dem ersten Kommissionierbereich 3 zugeführte Liefereinheit in einer Depalettiervorrichtung 4 depalettiert, sodass die in der Liefereinheit enthaltenen Handelseinheiten vereinzelt werden. Diese Handelseinheiten können auf einem sogenannten Tray abgelegt werden, um mit diesem im ersten Kommissionierbereich 3 transportiert und in einem Lager 5 für die Handelseinheiten eingelagert zu werden. Die Verwendung eines Trays ist deshalb vorteilhaft, weil dadurch beliebig geformte Handelseinheiten, wie beispielsweise Säcke, Flaschengebinde und dergleichen sicher und zuverlässig in dem ersten Kommissionierbereich 3 gehandhabt werden können. Grundprinzip ist dabei dass sich immer nur eine Handelseinheit auf einem Tray befindet. Dies ermöglicht im späteren Ablauf bei der automatischen Kommissionierung ein Höchstmaß an Flexibilität bei der Zusammenstellung eines Auftrags.

Die Handelseinheiten werden zunächst in einem Lager 5 für Handelseinheiten eingelagert, um sie dann entsprechend dem Kommissionierauftrag in einer vorgegeben Sequenz aus dem Lager 5 für die Handelseinheiten zu entnehmen und einer Beladestation 6 zuzuführen, die die nacheinander aus dem Lager 5 für Handelseinheiten ausgelagerten unterschiedlichen Handelseinheiten auf einem Ladungsträger für eine Versandeinheit zusammenführt, z. B. stapelt, um eine Versandeinheit zu bilden. Die entsprechende Versandeinheit kann dann beispielsweise in einer Verpackungsstation 7 zusätzlich verpackt werden, beispielsweise mit einer Wickelfolie oder einer Schrumpffolie oder dergleichen.

Der erste Kommissionierbereich 3 mit einer Depalettiervorrichtung, einem Lager 5 für Handelseinheiten, einer Beladestation 6 und einer optionalen Verpackungsstation 7 entspricht einem Kommissioniersystem, wie es beispielsweise in der DE 103 13 577 B4 beschrieben ist, wo beispielsweise insbesondere die Beladestation 6 beschrieben ist.

Eine im ersten Kommissionierbereich 3 aus Handelseinheiten zusammengestellte Versandeinheit kann dann im Versandbereich 8 ausgegeben werden, um beispielsweise in einen zu beliefernden Einzelhandelsladen ausgeliefert zu werden.

Die Zusammensetzung der Versandeinheit, insbesondere die Stapelfolge der Handelseinheiten, beispielsweise auf einer Palette, kann dabei so gewählt werden, dass dies genau einer Entladesequenz im Laden entsprechend der dort aufgestellten Verkaufsregale erfolgt. Dies kann durch die Steuerung, die das Gesamtsystem auf Basis einer softwarebasierten Datenverarbeitung steuert, entsprechend vorgegeben werden. Darüber hinaus können weitere Parameter, wie beispielsweise das Gewicht der zu stapelnden Handelseinheiten, die Ausnutzung des Ladungsträgers und dergleichen für die Bildung der Versandeinheiten herangezogen werden.

Daneben umfasst das in Fig. 1 gezeigte Kommissioniersystem einen zweiten, parallel zum ersten Kommissionierbereich 3 angeordneten zweiten Kommissionierbereich 10, der eine vollständig andersartige Art der Kommissionierung verwirklicht. Der zweite Kommissionierbereich 10 ist nicht für die Kommissionierung von Handelseinheiten ausgelegt, sondern für die Kommissionierung von Einzelwaren, also von kleineren Packungsgrößen. Hierzu werden die Waren in einer Umpackstation in Einzelwarenlagereinheiten umgepackt, die zum Transport der Einzelwaren in der Einzelkommissioniereinrichtung des zweiten Kommissionierbereichs 10 und zur Zwischenlagerung in einem Einzelkommissionierlager 12 dienen und ein Entnehmen von Einzelwaren und Kommissionieren derselben in einen Einzelwarenversandbehälter ermöglichen. Als Einzelwarenlagereinheiten können beispielsweise Kunststoffbehälter eingesetzt werden, in denen die Einzelwaren enthalten sind.

Das Umpacken kann manuell oder voll - oder halbautomatisch erfolgen.

Da die Anlieferung der Waren in dem zweiten Kommissionierbereich 10 ebenfalls in Form von Versandeinheiten erfolgen kann, bei denen beispielsweise die Einzelwaren in Handelseinheiten zusammengefasst auf einem Ladungsträger, wie einer Palette, gestapelt sind, kann der zweite Kommissionierbereich 10 im Bereich der Umpackstation 11 ebenfalls eine Depalettiereinrichtung zum Depalettieren der Handelseinheiten und zusätzlich eine vollautomatisierte, halbautomatisierte oder manuelle Umpackeinrichtung enthalten, bei der die Einzelwaren aus den Handelseinheiten in Einzelwarenlagereinheiten, wie beispielsweise Kunststoffbehälter oder dergleichen umgepackt werden.

Die Einzelwarenlagereinheiten werden dann in einem Einzelkommissionierlager 12 für Einzelwarenlagereinheiten zwischengelagert, bevor sie an Bereitsstellungsplätzen 13 der Einzelkommissioniereinrichtung für den Kommissioniervorgang bereitgestellt werden. An den Bereitstellungsplätzen 13 können die Einzelwaren aus den Einzelwarenlagereinheiten entnommen und in einen Einzelwarenversandbehälter kommissioniert werden. Nach dem Abschluss des Kommissionierauftrags können die kommissionierten Einzelwarenversandbehälter in einem Versandpuffer 14 zwischengelagert werden und mit Hilfe einer Palettiereinrichtung 15 auf einem Ladungsträger, wie einer Palette oder einem Rollcontainer gestapelt und zu einer Behälterversandeinheit zusammengeführt werden, welche wiederum in den Postausgangsbereich 8 zur Übergabe an einen LKW oder dergleichen verbracht werden kann. Alternativ ist es jedoch möglich, die Einzelwarenversandbehälter einzeln z. B. per Post zu verschicken oder zur Abholung bereitzustellen.

Die Fig. 1 zeigt, dass das erfindungsgemäße Ausführungsbeispiel der Fig. 1 nicht nur die parallel Kommissionierung von Handelseinheiten im ersten Kommissionierbereich 3 und die Kommissionierung von Einzelwaren im zweiten Kommissionierbereich 10 ermöglicht, sondern dass vielmehr ein Zusammenwirken des ersten Kommissionierbereichs 3 und des zweiten Kommissionierbereichs 10 in der Weise möglich ist, dass die Ausgangseinheiten des ersten Kommissionierbereichs 3, also die Versandeinheiten als Eingangseinheiten des zweiten Kommissionierbereichs 10 Verwendung finden, also die Versandeinheiten in der Umpackstation 11 Verwendung finden, um Einzelwaren aus den Handelseinheiten, die beispielsweise im Lager 5 für Handelseinheiten gelagert sind, bei der Einzelwarenkommissionierung des zweiten Kommissionierbereichs 10 verwenden zu können. Durch die Verwendung der Versandeinheiten aus dem ersten Kommissionierbereich 3 als Eingangseinheit für den zweiten Kommissionierbereich 10 ist bei geringem Aufwand, nämlich lediglich einer Förderstrecke 9 ein flexibler und effektiver Einsatz der Komponenten des Kommissioniersystems möglich.

So können mit der von dem ersten Kommissionierbereich 3 bereitgestellten Versandeinheit mehrere unterschiedliche Waren in einzelnen Handelseinheiten im zweiten Kommissionierbereich 10 zur Verfügung gestellt werden, sodass der Lagerbereich im Einzelkommissionierlager 12 klein gehalten werden kann und unnötige Rücktransporte von nur teilweise verwendbaren Liefereinheiten vermieden werden können. Darüber hinaus kann durch die Kombination des ersten Kommissionierbereichs 3 und des zweiten Kommissionerbereichs 10 eine gemeinsame Auslieferung der im ersten Kommissionierbereich 3 erzeugten Versandeinheiten und der Behälterversandeinheiten aus dem zweiten Kommissionierbereich 10 erfolgen, sodass Einzelhandelsgeschäfte gleichzeitig mit Nachschub für die Verkaufsfläche sowie mit vorbestellten, kundenspezifischen Einzelwarenversandbehältern beliefert werden können.

Zusätzlich oder alternativ kann eine Förderstrecke 16 vorgesehen sein, entlang der kommissionierte Einzelwarenversandbehälter von der Einzelwarenkommissionierung 10 zum Lager 5 für die Handelseinheiten oder der Beladestation 6 des ersten Kommissionierbereichs 3 überführt werden können.

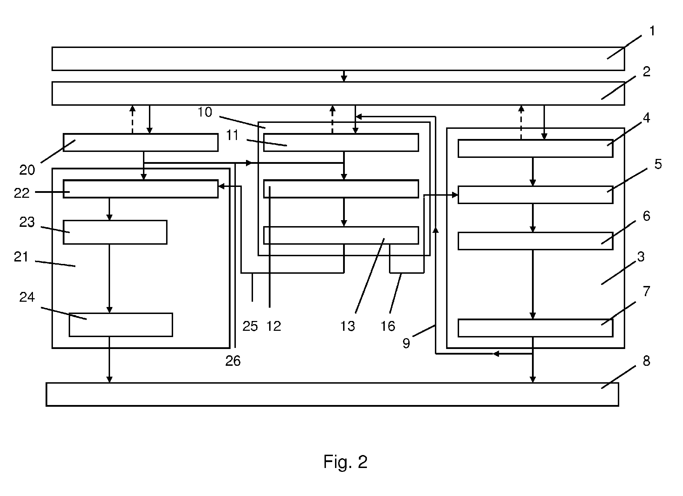

Die Fig. 2 zeigt ein weiteres Ausführungsbeispiel für ein erfindungsgemäßes Kommissioniersystem bei welchem wiederum ein Empfangsbereich 1 mit einem Liefereinheitenlager 2 und ein erster Kommissionierbereich sowie ein zweiter Kommissionierbereich 10 gegeben sind. Diese Bereiche entsprechen der Ausführungsform der Fig. 1, sodass für die jeweiligen Bestandteile die gleichen Bezugszeichen verwendet worden sind und auf eine wiederholte Beschreibung verzichtet wird. Somit werden lediglich die Unterschiede gegenüber der Ausführungsform der Fig. 1 nachfolgend detailliert beschrieben.

Die Ausführungsform der Fig. 2 unterscheidet sich von der Ausführungsform der Fig. 1 im Wesentlichen dadurch, dass ein dritter Kommissionierbereich 21 vorgesehen ist, welcher wiederum parallel zu dem ersten Kommissionierbereich 3 und dem zweiten Kommissionierbereich 10 betrieben werden kann.

Der dritte Kommissionierbereich 21 ist auf die Kommissionierung von Transportbehältern ausgelegt, wie beispielsweise von Obst oder Gemüsebehältern oder Getränkekisten.

Dem dritten Kommissionierbereich 21 ist wiederum eine Depalettierstation 20 vorgeschaltet bzw. zugeordnet, mit der sortenrein angelieferte Liefereinheiten aus dem Empfangsbereich 1 oder dem Liefereinheitenlager 2 in einzelne Transportbehälter vereinzelt werden können. Die Transportbehälter, die beispielsweise Obst oder Gemüse enthalten, werden wiederum in ein Lager, nämlich das Transportbehälterlager 22 eingelagert, aus dem sie entsprechend dem Kommissionierauftrag entnommen und in einer Stapelvorrichtung 23 entsprechend dem Kommissionierauftrag zusammengeführt werden können. Die so gebildeten Stapel können weiterhin in einer Palettiereinrichtung 24 auf Paletten geladen oder in anderweitiger Weise verpackt oder zu einem Verbund zusammengeführt werden, welcher eine Behälterversandeinheit bildet, die dem Versandbereich übergeben und von dort entsprechend versandt werden kann. Da es sich bei den Transportbehältern um identische oder vergleichbare Behälter wie die Einzelwarenversandbehälter handelt, kann im zweiten Kommissionierbereich 10 auf entsprechende Komponenten, mit denen Einzelwarenversandbehälter zu einer Versandeinheit zusammengestellt werden, verzichtet werden und stattdessen werden die aus dem zweiten Kommissionierbereich 10 stammenden Einzelwarenversandbehälter über die Förderstrecke 25 in das Transportbehälterlager des dritten Kommissionierbereichs 21 eingelagert, um von dort über die Stapelvorrichtung 23 bzw. die Palettiereinrichtung 24 zu einer Behälterversandeinheit zusammengeführt zu werden, in der sowohl Einzelwarenversandbehälter des zweiten Kommissionierbereichs 3 und Transportbehälter des dritten Kommissionierbereichs 21, also beispielsweise Obst- und Gemüsebehälter zusammengestellt sein können.

Da bei dem dritten Kommissionierbereich 21 bereits die Liefereinheiten, die sortenrein von den Herstellern angeliefert werden, entsprechende Transportbehälter aufweisen, in denen die Einzelwaren, also beispielsweise das Obst oder Gemüse enthalten sind, kann der dritte Kommissionierbereich 21 mit dem zweiten Kommissionierbereich 10 über eine Förderstrecke 26 verbunden sein und gefüllte Transportbehälter in den zweiten Kommissionierbereich 10 überführen, wo die Transportbehälter als Einzelwarenlagereinheiten eingesetzt werden können.

Somit bietet die Ausführungsform der Fig. 2 einen dritten Kommissionierbereich 21, der parallel zu den Kommissionierbereichen 3 und 10 separat und unabhängig betrieben werden kann und gleichzeitig durch Zusammenwirken mit dem zweiten Kommissionierbereich 10 Synergieeffekte ermöglicht. Beispielsweise ist es möglich, dass, wie in der Ausführungsform der Fig. 2 gezeigt, auf die Einzelwarenversandbehälterpackeinrichtung 14, 15 verzichtet werden kann, da die Einzelwarenversandbehälter im dritten Kommissionierbereich 21 mit verarbeitet werden können.

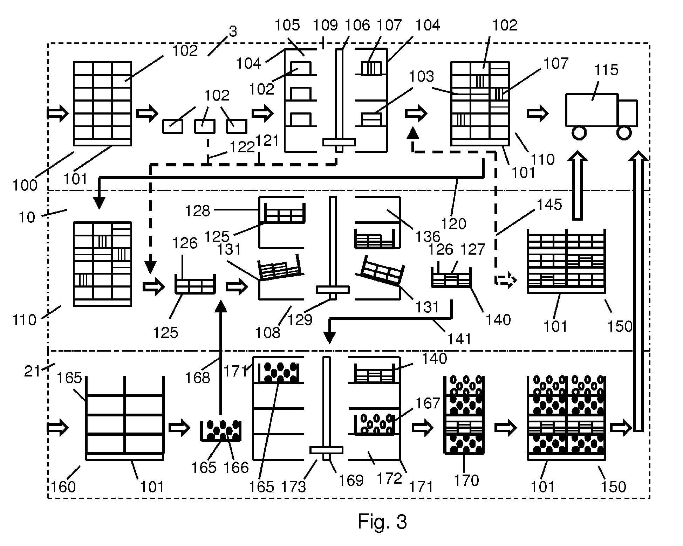

Die Fig. 3 zeigt eine Darstellung eines erfindungsgemäßen Kommissioniersystems ähnlich dem in Fig. 2 gezeigten System mit einer gegenständlichen Darstellung einzelner Komponenten.

In der Fig. 3 ist eine Liefereinheit 100 gezeigt, bei der auf einem Ladungsträger 101 in Form einer Palette eine Anzahl von Handelseinheiten 102 gestapelt ist. Die Handelseinheiten 102 sind sortenrein, wie sie von dem Hersteller und Lieferanten der entsprechenden Waren angeliefert werden. In einer Depalettierstation (nicht gezeigt), werden die Handelseinheiten 102 vereinzelt und über eine Fördereinrichtung einem automatisierten Kleinteilelager 109 zugeführt, welches Regale 104 mit Lagerfächern 105 aufweist, die über ein Lagerbediengerät 106 vollautomatisch mit Handelseinheiten 102 bestückt und geleert werden können.

In den Regalen 104 sind in dem gezeigten Ausführungsbeispiel drei unterschiedliche Wareneinheiten, nämlich die Wareneinheiten 102, 103 und 107 gelagert, bei denen es sich beispielsweise um unterschiedliche Lebensmittel oder dergleichen handeln kann. Aus dem automatischen Kleinteilelager 109 werden die Handelseinheiten 102, 103, 107 entsprechend dem Kommissionierauftrag bzw. den Auslagerbefehlen der Steuerungseinrichtung des Kommissioniersystems in der Reihenfolge ausgelagert, wie sie durch eine Beladestation, wie sie beispielsweise in der Fig. 10 der DE 103 13 577 B4 beschrieben ist, auf einem Ladungsträger 101 gestapelt werden sollen, um eine Versandeinheit 110 mit unterschiedlichen Handelseinheiten 103, 107, 108 zu bilden. Eine derartige Versandeinheit 110, die beispielsweise zur Wiederbefüllung von Regalen in einem Lebensmitteleinzelhandelsgeschäft an dieses versendet wird, kann in einen hierfür vorgesehenen Lastkraftwagen 115 für den entsprechenden Transport zum Einzelhandelsgeschäft verladen werden.

Zusätzlich kann die Versandeinheit 110 jedoch entlang der Förderbahn 120 zum Eingangsbereich des zweiten Kommissionierbereichs 10 gefördert werden, wo die Einzelwaren in den Handelseinheiten 102, 103, 107 in Einzelwarenlagereinheiten 125 umgepackt werden. Die Einzelwarenlagereinheiten 125 in Form von beispielsweise oben offenen Kuststoffkisten werden in ein Einzelkommissionierlager 108 vollautomatisch über ein Regalbediengerät 129 eingelagert, wobei die Regale 128 neben Lagerfächern 136 Bereitstellungsplätze 131 für die Kommissionierung bereitstellen, wie dies beispielsweise auch in Fig. 3 der DE 197 19 651 A1 gezeigt ist. Das Einzelkommissionierlager 108 mit den Bereitstellungsplätzen 131 ermöglicht es die in den Einzelwarenlagereinheiten 125 gelagerten Einzelwaren 126 zur Kommissionierung bereitzustellen, wobei die Bereitstellungsplätze 131 als sogenannte Durchlaufkanäle konzipiert sind, bei denen die Einzelwarenlagereinheiten 125 von der Rückseite durch ein Lagerbediengerät 129 bereitgestellt werden, welches die Einzelwarenlagereinheiten 125 aus den Lagerfächern 136 entnimmt und in den Durchlaufkanälen der Bereitstellungsplätze 131 nachfüllt. Des Weiteren kann das Einzelkommissionierlager 108 unterschiedliche Bereitstellungsplätze aufweisen, und zwar zum einen stationäre Bereitstellungsplätzte 131, in denen bestimmte Waren ständig für die Kommissionierung bereitgestellt werden, wenn sie als sogenannte Schnellläufer häufig gebraucht werden und somit ein hoher Durchsatz an den entsprechenden Einzelwaren vorliegt. Daneben kann es sogenannte dynamische Bereitstellungsplätze geben, bei denen Einzelwaren bereitgestellt werden, die als sogenannte Langsamläufer lediglich selten nachgefragt werden, sodass die entsprechenden Waren in den Bereitstellungsplätzen nur dann bereitgestellt werden, wenn tatsächlicher Bedarf vorhanden ist. Ansonsten werden derartige Einzelwaren in ihren Einzelwarenlagereinheiten 125 in den Lagerfächern 136 immer wieder zwischengelagert, wie dies im rechten Regal des Einzelwarenlagers 108 gezeigt ist.

Aus den Bereitstellungsplätzen 131 werden die Einzelwaren 126 in einen Einzelwarenversandbehälter 140 zusammen mit anderen Einzelwaren 127 kommissioniert, um einen Einzelwarenversandbehälter 140 gemäß dem Kommissionierauftrag zu füllen. Beispielsweise kann es sich dabei um eine Bestellung eines einzelnen Kunden des Einzelhandelsgeschäfts handeln, der diese Bestellung fertig gepackt in dem Einzelhandelsgeschäft abholen möchte.

Verschiedene Einzelwarenversandbehälter 140 können in einer Einzelwarenversandbehälterpackeinrichtung (nicht gezeigt) auf einem Ladungsträger 101, wie einer Palette, zu einer Behälterversandeinheit 150 zusammengeführt werden, sodass verschiedene Einzelwarenversandbehälter 140 in der Behälterversandeinheit 150 zusammen zu dem Einzelwarenhandelsgeschäft transportiert werden können.

Wie sich durch die gestrichelten Linien 121, 122, die optionale Transportstrecken anzeigen, ergibt, kann optional bzw. alternativ auch eine direkte Übermittlung der vereinzelten Handelseinheiten aus dem ersten Kommissionierbereich 3 an die Umpackstation des zweiten Kommissionierbereichs 10 erfolgen, sodass die Bildung einer Versandeinheit 110 im ersten Kommissionierbereich 3 und die Vereinzelung der Handelseinheiten in der Umpackstation des zweiten Kommissionierbereichs 10 eingespart werden kann. Da allerdings der zweite Kommissionierbereich 10 möglicherweise mit einem Eingangsbereich für Versandeinheiten 110 ausgestattet sein soll, um beispielsweise Liefereinheiten aus dem Anlieferbereich oder einem Liefereinheitenlager 2 aufnehmen zu können, kann es zur Verringerung der Komplexität und einer einfachen Handhabung einfacher sein, wie dargestellt die Versandeinheiten 110 aus dem ersten Kommissionierbereich 3 in den zweiten Kommissionierbereich 10 zu liefern. Für den Fall, dass jedoch auf die Möglichkeit verzichtet werden soll, dass Liefereinheiten direkt in den zweiten Kommissionierbereich 10 geführt werden, kann bei der Umpackstation auf eine Depalettiereinrichtung verzichtet werden und die vereinzelten Handelseinheiten aus dem ersten Kommissionierbereich 3 können unmittelbar in den Bereich der Umpackstation geliefert werden, um dort ein Umpacken der Einzelwaren in die Einzelwarenlagereinheiten 125 vorzunehmen.

Des Weiteren besteht die Möglichkeit nicht nur separat Versandeinheiten 110 im ersten Kommissionierbereich 3 und Behälterversandeinheiten 150 im zweiten Kommissionierbereich 10 zu bilden, sondern kombinierte Versandeinheiten, also beispielsweise über einen Transport der Einzelwarenversandbehälter 140 über eine Transportstrecke 145 zum Lagerbereich 109 des ersten Kommissionierbereichs 3, um dort in die Versandeinheit 110 mit aufgenommen zu werden.

Darüber hinaus besteht die Möglichkeit zusätzlich oder alternativ die fertige gepackten Einzelwarenversandbehälter 140 in einer Transportbehälterkommissioniervorrichtung 21 weiter zu verarbeiten, um sie dort zusammen mit Transportbehältern der Transportbehälterkommissioniervorrichtung 21 oder mit anderen Einzelwarenversandbehältern 140 zu einer Behälterversandeinheit 150 zusammen zu führen. Entsprechend ist eine Transportstrecke 141 für fertig gepackte Einzelwarenversandbehälter vorgesehen, um diese in ein Transportbehälterlager 173 zu überführen.

Das Transportbehälterlager 173 umfasst Regale 171 mit Lagerfächern 172 für Transportbehälter 165 und fertig gepackte Einzelwarenversandbehälter 140. Aus dem Transportbehälterlager 173 werden die entsprechenden Behälter mit einem Regalbediengerät 169 automatisiert entsprechend der durch die Steuereinrichtung vorgegebenen Sequenz ausgelagert, um bei einer Stapeleinrichtung (nicht gezeigt) in einem gewünschten Stapel 170 zusammengeführt zu werden, der wiederum mit einer Palettiervorrichtung (nicht gezeigt) auf einem geeigneten Ladungsträger 101 zur Bildung einer Behälterversandeinheit 150 gelagert werden kann.

Die Transportbehälter 165, 167 dienen beispielsweise der Aufnahme von Obst und Gemüse, wobei Obst und Gemüse bereits in den Liefereinheiten 160 in den entsprechenden Transportbehältern 165 gelagert sind.

Die Liefereinheit 160 mit den Transportbehältern 165 wird mit einer Depalettiervorrichtung in einzelne Transportbehälter 165 mit dem darin befindlichen Obst oder Gemüse 166 aufgelöst, wobei die Transportbehälter 165 entsprechend vollautomatisch mittels des Regalbediengeräts 169 in dem Transportbehälterlager 173 eingelagert werden, um dann wie beschrieben kommissioniert zu werden.

Die Transportbehälter 165 können nach der Depalettierung über eine Transportbehälterförderstrecke 168 auch dem zweiten Kommissionierbereich 10 zur Verfügung gestellt werden und zwar zur Einlagerung in das Einzelkommissionierlager 108, sodass die Transportbehälter 165 mit dem jeweiligen Inhalt in den Bereitstellungspositionen 131 zur Verfügung gestellt werden können, sodass auch Waren aus Transportbehältern 165 in dem zweiten Kommissionierbereich 10 der Einzelkommissionierung kommissioniert werden können.

Insgesamt ergibt sich mit dem vorgestellten Kommissioniersystem ein sehr flexibel einsetzbares und hocheffizientes Kommissioniersystem, welches unter Ausnutzung der verschiedenen Kommissionierarten und Zusammenwirken derselben eine hocheffiziente Lösung für Kommissionieraufgaben im Bereich eines kombinierten Vertriebs über Einzelhandelsgeschäfte und Online - Vertrieb (e - commerce) sowie insbesondere der Verwirklichung des click-and-collect-Systems ermöglicht.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die vorliegende Offenbarung schließt sämtliche Kombinationen der vorgestellten Einzelmerkmale mit ein.

## Patentansprüche

1. Kommissioniersystem mit einer Liefereinheitendepalettiervorrichtung (4) zum Depalettieren von Liefereinheiten (100) in Handelseinheiten (102,103,107), mit einem Lager (109) für die Handelseinheiten und mit einer Vorrichtung (5,6) zum automatischen Kommissionieren von Handelseinheiten in Versandeinheiten (110),
**dadurch gekennzeichnet, dass**
weiterhin eine Einzelkommissioniereinrichtung (10) mit einer Umpackstation (11) zum Umpacken von Einzelwaren (126,127) aus Handelseinheiten vorgesehen ist, in welcher Einzelwaren aus Handelseinheiten in Einzelwarenlagereinheiten (125) umgepackt werden, wobei in der Einzelkommissioniereinrichtung (10) die Einzelwaren in den Einzelwarenlagereinheiten (125) bereitgestellt werden, um in Einzelwarenversandbehälter kommissioniert zu werden.

2. Kommissioniersystem nach Anspruch 1,
**dadurch gekennzeichnet, dass**
das Kommissioniersystem eine Fördereinrichtung (9,120) zum Transport von Versandeinheiten (110) zur Umpackstation und/oder eine Fördereinrichtung (16) zum Transport von Einzelwarenversandbehälter zur Vorrichtung (5,6) zum automatischen Kommissionieren von Handelseinheiten umfasst.

3. Kommissioniersystem nach Anspruch 1 oder 2,
**dadurch gekennzeichnet, dass**
das Kommissioniersystem weiterhin eine Einzelwarenversandbehälterpackeinrichtung (14,15) zum Zusammenführen von Einzelwarenversandbehältern (140) zu einer Behälterversandeinheit (150) umfasst.

4. Kommissioniersystem nach einem der vorhergehenden Ansprüche,
**dadurch gekennzeichnet, dass**
das Kommissioniersystem weiterhin eine Transportbehälterkommissioniervorrichtung (21) zum Kommissionieren von Transportbehältern (165) umfasst.

5. Kommissioniersystem nach Anspruch 4,
**dadurch gekennzeichnet, dass**
die Transportbehälterkommissioniervorrichtung (21) eine Transportbehälterdepalettiervorrichtung (20) umfasst, in der Transportbehälter (165) aus einer Transportbehälterliefereinheit (160) vereinzelt werden.

6. Kommissioniersystem nach Anspruch 4 oder 5,
**dadurch gekennzeichnet, dass**
die Transportbehälterkommissioniervorrichtung (21) ein Transportbehälterlager (169) zur Lagerung von Transportbehältern (165) und eine Stapel - und/oder Palettiereinrichtung (24) zum Zusammenführen und Kommissionieren von Transportbehältern in eine Behälterversandeinheit (150) umfasst.

7. Kommissioniersystem nach einem der Ansprüche 5 oder 6,
**dadurch gekennzeichnet, dass**
das Kommissioniersystem eine Transportbehältertransportstrecke (26,168) aufweist, mit der Transportbehälter von der Transportbehälterdepalettiervorrichtung (20) zur Einzelkommissioniereinrichtung (10) transportiert werden können.

8. Kommissioniersystem nach einem der Ansprüche 5 bis 7,
**dadurch gekennzeichnet, dass**
das Kommissioniersystem eine Einzelwarenversandbehälterförderstrecke (25,141) umfasst, die die Einzelkommissioniereinrichtung (10) mit dem Transportbehälterlager (169) verbindet, so dass Einzelwarenversandbehälter (140) in das Transportbehälterlager eingelagert werden können.

9. Kommissioniersystem nach einem der vorhergehenden Ansprüche,
**dadurch gekennzeichnet, dass**
das Kommissioniersystem ein Liefereinheitenlager (2) umfasst, welches mit Ausgabeeinrichtungen zur Ausgabe von Liefereinheiten an die Liefereinheitendepalettiervorrichtung (4) und vorzugsweise an die Umpackstation (11) und/oder an eine Eingangsstation einer Transportbehälterkommissioniervorrichtung (21), insbesondere einer Depalettiervorrichtung versehen ist.

10. Kommissioniersystem nach einem der vorhergehenden Ansprüche,
**dadurch gekennzeichnet, dass**
die Einzelkommissioniereinrichtung ein Einzelkommissionierlager (108) für Einzelwarenlagereinheiten (125) umfasst und/oder statische und/oder dynamische Bereitstellungsplätze (131) für Einzelwarenlagereinheiten umfasst, in denen die Einzelwarenlagereinheiten für die Kommissionierung bereitgestellt werden.

11. Kommissioniersystem nach Anspruch 10,
**dadurch gekennzeichnet, dass**
die Einzelkommissioniereinrichtung mindestens eine Lagerbediengerät (129) umfasst, mit welchem vollautomatisch Einzelwarenlagereinheiten (125) aus dem Kommissionierlager in Bereitstellungsplätze (131) transportiert und/oder aus diesen entnommen und in das Kommissionierlager zurück transportiert werden.

12. Verfahren zur Kommissionierung von Waren, insbesondere von Waren des Lebensmitteleinzelhandels, vorzugsweise mit einem Kommissioniersystem nach einem der vorhergehenden Ansprüche, bei welchem
Liefereinheiten (100) mit mehreren Handelseinheiten (102) in separate Handelseinheiten vereinzelt werden,
die Handelseinheiten in einem Lager (5,109) für Handelseinheiten eingelagert werden, und
beliebige Handelseinheiten vollautomatisch zu einer Versandeinheit (110) zusammengeführt und kommissioniert werden,
**dadurch gekennzeichnet, dass**
Einzelwaren (126,127) der Handelseinheiten in Einzelwarenlagereinheiten (125) umgepackt werden und in einer Einzelkommissioniereinrichtung (10) bereit gestellt und in Einzelwarenversandeinheiten (140) kommissioniert werden.

13. Verfahren nach Anspruch 12,
**dadurch gekennzeichnet, dass**
die Einzelwaren (126,127), die in einer Umpackstation (11) in Einzelwarenlagereinheiten (125) umgepackt werden, zumindest teilweise aus Handelseinheiten (102,102,107) kommen, die direkt oder mittelbar aus dem Lager (5,109) für Handelseinheiten zur Umpackstation (11) transportiert werden.

14. Verfahren nach Anspruch 12 oder 13,
**dadurch gekennzeichnet, dass**
die Einzelwarenversandbehälter (140) zu Versandeinheiten (150) kombiniert werden, wobei insbesondere Transportbehälter (165) aus einer Transportbehälterkommissioniervorrichtung (21) in die Versandeinheiten (150) integriert werden können.

15. Verfahren nach einem der Ansprüche 12 bis 14,
**dadurch gekennzeichnet, dass**
Transportbehälter (165) aus einer Transportbehälterkommissioniervorrichtung (21) in der Einzelkommissioniereinrichtung (10) bereitgestellt werden.
